# EUROPÄISCHE PATENTSCHRIFT

(11) **EP 1 957 572 B1**
(45) Veröffentlichungstag und Bekanntmachung des Hinweises auf die Patenterteilung: **26.10.2011**
(21) Anmeldenummer: 06829371.1
(22) Anmeldetag: 07.12.2006
(51) Int. Cl.: C08K 5/00

(54) **MODELLIERMASSE SOWIE DEREN VERWENDUNG**
MODELING COMPOSITION AND ITS USE
MATERIAU POUR MOULAGE ET SON UTILISATION

(30) Priorität: 08.12.2005 DE 102005059143
(43) Veröffentlichungstag der Anmeldung: 20.08.2008
(73) Patentinhaber: J.S. Staedtler GmbH & Co. KG, 90427 Nürnberg (DE)
(72) Erfinder: FREESE, Yvette, 93055 Regensburg (DE); REUTTER, Ingrid, 90455 Nürnberg (DE); SCHNORRER, Heinrich, 92421 Schwandorf (DE)
(86) Internationale Anmeldenummer: PCT/EP2006/011748
(87) Internationale Veröffentlichungsnummer: WO 2007/065675

(56) Entgegenhaltungen:
- DE-A1- 2 515 757
- DE-A1-102004 056 923

## Beschreibung

Die Erfindung betrifft die Verwendung einer ofenhärtbaren Modelliermasse.

Plastische, ofenhärtbare Massen zum Formen und Modellieren von Gegenständen sind prinzipiell bekannt.

Unter Modelliermassen sind auch sogenannte Clays, bzw. bei polymerhaltigen Massen Polymerclays zu verstehen.

So ist aus DE 25 15 757 C3 eine plastische, von Hand verformbare und durch Erhitzen härtbare Masse bekannt.

Eine derartige Masse besteht im Wesentlichen aus Polyvinylchlorid, Füllstoff und Weichmacher.

Nachteilig bei derartigen Massen ist, dass diese nur bei einer sehr hohen Temperatur aushärten, wobei der Härtevorgang langsam von Statten geht. Zudem ist die Bruchfestigkeit derartiger ausgehärteter Massen ungenügend. Weiter ist es als nachteilig anzusehen, dass derartige Massen einen Gehalt von bis zu 30 Gew. % phthalathaltiger Weichmacher aufweisen, welche im Verdacht stehen, hormon-oder fortpflanzungsschädigende Wirkung zu besitzen.

Phthalathaltige Weichmacher werden Kunststoffen, denen elastische Eigenschaften verliehen werden sollen, in mehr oder weniger hoher Konzentration, bis zu 40 Gew. % zugesetzt. Sie wirken dabei als sogenannte äußere Weichmacher, da sie mit dem Kunststoff keine chemische Bindung eingehen. Aufgrund der fehlenden chemischen Bindung können die Phthalate wieder relativ leicht aus dem Kunststoff herausgelöst bzw. allmählich heraus migrieren.

Weiter ist aus der DE 102004056923 eine farblose fließfähige Masse für den industriellen Einsatz bekannt, die einen hohen Gehalt an Weichmachern aufweist, um eine fließfähige Konsistenz zu erreichen. Die Weichmacher können in dieser Mischung phthalathaltig oder phthalatfrei sein.

Als nachteilig ist es hierbei anzusehen, dass derartige Massen nicht als Modelliermassen einsetzbar sind und nach deren Härtung spröde Eigenschaften aufweisen, was dazu führt, dass die Gegenstände leicht zerstört werden können.

**Aufgabe** der Erfindung ist es daher, eine Modellier- oder Formmasse für den Gebrauch durch Kinder und zur Herstellung von kunstgewerblichen Gegenständen und die daraus hergestellten Produkte zu schaffen, die die eingangs genannten Nachteile nicht aufweist und die insbesondere bei niedrigen Temperaturen aushärtet und im ausgehärteten Zustand eine gute Bruchfestigkeit bei möglichst geringem Weichmacheranteil aufweist.

Weiter ist es Aufgabe der Erfindung, dass die erfindungsgemäß verwendete Knetmasse nahezu frei von für Menschen gesundheitsgefährdenden und/oder bedenklichen Inhaltsstoffen ist.

Diese Aufgaben werden mit den in Anspruch 1 umfassten Merkmalen gelöst. Vorteilhafte Ausgestaltungen und Weiterbildungen sind in den weiteren Ansprüchen umfasst.

Die besonderen Vorteile der erfindungsgemäß verwendeten Massen liegen in der leichten Bearbeitbarkeit der Knetmasse mit bloßen Händen. Die Konsistenz der Knetmasse ist bei normaler Umgebungstemperatur annähernd konstant und härtet bei den empfohlenen Lagerbedingungen kühl, trocken, ohne direkte Sonneneinstrahlung auch bei mehrmonatiger Lagerung, bis 48 Monate nicht aus.

Die erfindungsgemäß verwendete Modelliermasse besteht aus Bindemittel, welches als Plastisol vorliegt und ggf. weiteren Zusatzstoffen, wobei sich das Plastisol im Wesentlichen aus PVC und Weichmacher zusammensetzt und wobei die Masse mindestens einen phthalatfreien Weichmacher aufweist.

Das eingesetzte **Bindemittel** besteht im Wesentlichen aus Plastisol. Dieses Plastisol setzt sich im Wesentlichen aus PVC und Weichmacher zusammen. Dabei kann der PVC u. a. ein emulgatorhaltiger oder -freier Emulsions-PVC, Suspensions-PVC und Mikroperl-Suspensions-PVC oder eine Mischung der einzelnen PVC-Typen sein.

Der **phthalatfreie Weichmacher** ist auf Citronensäurebasis, auf Adipinsäurebasis und/oder Benzoat-ester-Basis aufgebaut. Der phthalatfreier Weichmacher ist z. B.

Acetyltributylcitrat, Tri-(2-ethylhexyl)-actylcitrat, Trioctylcitrat, Tridecylcitrat, Tributylcitrat, Trihexylcitrat, Triethylcitrat, Dioctyladipat, Diisodecyladipat, Diisononyladipat, Bis (2-ethylhexyl) adipate, 1,2-Cyclohexandicarbonsäurediisononylester, Essigsäureester von Monoglyceriden, Benzoaten oder ein Gemisch aus mindestens zweier dieser Substanzen.

Weiter kann der Weichmacher der Gruppe der Benzoate oder Benzoate ester angehören. Beispielhaft seinen 2,2,4-Triethyl-1,3-Pentanediyl Dibenzoate und Derivate davon, Triethylenglycol-dibenzoate, Diethylen glycol dibenzoate, Diethylen glycol monobenzoate und/oder Propylenglycoldibenzoate genannt.

Beliebige Mischungen aller vorgenannten Weichmacher sind möglich.

Die Masse weist 5 - 30 Gew. % phthalatfreien Weichmacher, bevorzugt 10 - 28 % phthalatfreien Weichmacher, besonders bevorzugt 15 - 24 % phthalatfreien Weichmacher auf.

Eine besonders bevorzugte Ausführungsform der Erfindung ist Verwendung einer Masse, welche frei von phthalathaltigen Weichmachern ist.

Ein **Stabilisator** verbessert die PVC-Stabilität, d. h. er verhindert u. a. die Abspaltung von Chlorwasserstoff. Dazu werden vor allem anorganische und organische Salze der Metalle Calcium, Zink, Zinn, Magnesium, Natrium und Kalium eingesetzt, z. B. Calciumstearat, Natriumstearat, Kaliumstearat, Zinkstearat, Magnesiumstearat, Zinnstearat und/oder Gemische der Metallsalze.

Der Masse werden außerdem noch Co-Stabilisatoren zugesetzt. Bei einem in der Masse eingesetzten **Co-Stabilisator** handelt es sich um einen Fettsäureester, bevorzugt um langkettigen Fettsäureester, mit einer Kettenlänge größer C12. Der Fettsäureester besteht bevorzugt aus einer geradkettigen Fettsäure und einem Alkohol. Der Alkohol ist vorzugsweise ein verzweigter Alkohol. Als Beispiel sei Octadecylsäureester genannt. Der Co-Stabilisator verbessert die Lagerstabilität des Bindemittels. Alterserscheinungen der Masse können auf diese Weise vorgebeugt werden.

Es hat sich für die Verbesserung der Lagerstabilität als vorteilhaft erwiesen, wenn der ggf. enthaltene Co-Stabilisator frei von 2-Ethylhexylderivaten ist.

Als weitere Beispiele seinen epoxidiertes Sojaöl, epoxidierter Ölsäuremethylester, epoxidierter Linolsäuremethylester, epoxidierter Linolensäuremethylester, epoxidierter Linolensäureisopropylester, epoxidierter Rapsfettsäuremethylester, epoxidierter Sojafettsäuremethylester, epoxidierter Leinfettsäuremethylester oder ein Gemisch aus diesen genannt.

Als **Füllstoffe** werden im Wesentlichen anorganische und organische Füllstoffe eingesetzt, z. B. Kaolin, Kreide, Talkum, Aluminiumhydroxid und/oder Tonmehl, welche eine Korngröße < 250 µm, bevorzugt kleiner 100 µm und besonders bevorzugt < 63 µm aufweisen.

Als weitere Füllstoffe können Metallglitter, Glitzerpulver und Glitzerplättchen oder Mischungen dieser Stoffe vorliegen um dadurch beispielsweise besondere optische Effekte zu erzielen.

Als Füllstoffe können auch sogenannte Leichtfüllstoffe eingesetzt bzw. anderen genannten Füllstoffen beigemischt werden. Beispiele für Leichtfüllstoffe sind Hohlkugeln, insbesondere Mikro-Glashohlkugeln, z. B. von der Firma 3M oder Osthoff Petrasch. Je nach dem Gehalt von Leichtfüllstoffen kann eine gewünschte Dichte eingestellt werden, welche vorteilhaft im Bereich von 0,3 bis 1,1 g/ml liegt. Auch die Größe von handelsüblichen Leichtfüllstoffen kann frei gewählt werden, wobei deren Größe vorzugsweise in einem Bereich von 10 bis 400 µm liegt.

Des Weiteren kann auch Füllstoff auf Polymerbasis eingesetzt werden. Beispielhaft für diese Gruppe seinen PAMA,PMMA und/oder Polethylen genannt.

Als **Farbmittel** können Pigmente in reiner Form, als Pulverpigmente, als wässrige Pigmentpräparationen, bevorzugt als azofreies Farbpigment, Effektpigment und/oder azofreier verlackter Farbstoff vorliegen. Als Auswahl einer Vielzahl von möglichen Farbpigmenten seien Pigment Yellow 14 (C.I. 21095), Pigment Red 254(C.I. 56110), Pigment Orange 34 (C.I. 21110) Pigment Red 122 (C.I. 73915) Pigment Green 7 (C.I. 74260), Pigment White 6 (C.I. 77891), Pigment Black 7 (C.I 77266), Pigment Red 101 (C.I. 77491), Pigment Violet 23 (C.I. 51319), Pigment Blue 29 (C.I. 77007), Pigment Yellow 185 (C.I. 56290), Pigment Yellow 1 (C.I.11680), Pigment Red 48:2 (C.I. 15865:2), Pigment Red 53:1 (C.I. 15585:1), Pigment Orange 34 (C.I. 21115), Pigment Yellow 83 (C.I. 21108) und Pigment Blue 15 (C.I. 74160) genannt.

Durch die Zugabe dieser Farbmittel erhält die Knete ein brillantes Aussehen.

Als weitere Farbmittel seinen Pearlescent Pigments, Mica Iron Metal Luster Pigments, Polyesterglitter Pigments und Luminescent Pigments angegeben.

Hierbei kann festgestellt werden, dass unterschiedlich eingefärbte Knetmassen zudem beliebig miteinander vermengt, vermischt oder verknetet werden können, wodurch ein Marmorierungseffekt erzielt wird.

Zweckmäßiger Weise sollten die verwendeten Farbmittel in der Knetmasse selbst nicht mehr wasserlöslich sein.

Die Erfindung soll anhand eines Rahmenbeispiels sowie einigen Rezepturbeispielen näher dargestellt werden.

| **Rahmenbeispiel** | | | | | |
|---|---|---|---|---|---|
| 5 | - | 95 | Gew. | % | PVC |
| 5 | - | 30 | Gew. | % | Weichmacher, phthalatfrei |
| 0 | - | 10 | Gew. | % | Stabilisator |
| 0 | - | 10 | Gew. | % | Co-Stabilisator |
| 0 | - | 75 | Gew. | % | Füllstoffe |
| 0 | - | 5 | Gew. | % | Farbmittel |
| 0 | - | 5 | Gew. | % | sonstige Zusätze |

Stabilisatoren, Co-Stabilisatoren, Farbmittel und Füllstoffe sind Beispiele für ggf. einsetzbare Zusatzstoffe.

Hier gilt es anzumerken, dass auch Mengen bis 5 Gew. % an phathlathaltigen Weichmachern als Zusatzstoffe enthalten sein können.

| **Rezepturbeispiel 1 - nicht gefärbte Masse** | | |
|---|---|---|
| 65 Gew. | % | PVC oder PVC-Copolymerisat |
| 19 Gew. | % | Weichmacher auf Adipinsäurebasis |
| 7 Gew. | % | Stabilisator |
| 19 Gew. | % | Talk |

| **Rezepturbeispiel 2 - rote Masse** | | |
|---|---|---|
| 63 Gew. | % | PVC |
| 24 Gew. | % | Weichmacher auf Citronensäurebasis |
| 1 Gew. | % | Stabilisatoren |
| 7 Gew. | % | Co-Stabilisatoren |
| 4 Gew. | % | Füllstoff |
| 1 Gew. | % | Pigment Red 254 |

| **Rezepturbeispiel 3 - gelbe Masse** | | | |
|---|---|---|---|
| 65 | Gew. | % | PVC |
| 21,5 | Gew. | % | Weichmacher auf Citronensäurebasis |
| 1,5 | Gew. | % | Co-Stabilisator |
| 5,5 | Gew. | % | Stabilisator |
| 6,0 | Gew. | % | Füllstoff (Kreide, Kieselsäure) |
| 0,5 | Gew. | % | Pigment Yellow 83 |

| **Stand der Technik - ockerfarbene Vergleichsrezeptur** | |
|---|---|
| 15 kg | Emulsions PVC |
| 17 kg | Suspensions PVC |
| 2,5 kg | Calciumstearat |
| 13,5kg | Di-n-octylphthalat (Weichmacher) |
| 1 kg | Octyl-Fettsäureester |
| 14 kg | Aliminiumsilikat |
| 0,5kg | Pigmente (Ockermischung) |

Der Gehalt an Weichmacher beträgt in einer bevorzugten Ausführungsform zwischen 10 und 28 Gew. % und in einer besonders bevorzugten Ausführungsform zwischen 15 und 24 Gew. %.

Der bevorzugt eingesetzte phthalatfreie Weichmacher ist auf Citronensäurebasis und/oder auf Adipinsäurebasis aufgebaut.

Eine gewünschte Konsistenz der Masse kann problemlos durch die Variation von Bindemittelgehalt und/oder Weichmachergehalt eingestellt werden.

Die erfindungsgemäß verwendete Masse hat gegenüber dem Stand der Technik folgenden Vorteil:
Bei gleicher Härtetemperatur von 130°C verringert sich die Aushärtezeit deutlich. Sie beträgt nur noch 15 Minuten statt bisher 30 Minuten.
Bei gleicher Aushärtedauer von 30 Minuten härtet die Masse bereits bei deutlich niedrigerer Temperatur von 110°C aus. Auch kann die Masse bereits bei unter 100°C ausgehärtet werden. Bei 93°C und einer Aushärtedauer von 40 Minuten ist die Masse bereits gehärtet.

In der nachfolgenden Tabelle ist die Aushärtezeit der Masse gegen die Aushärtezeit einer Masse nach dem Stand der Technik in Abhängigkeit von der Temperatur dargestellt. Deutlich zu erkennen ist, dass die Aushärtezeit der Masse um 50 % kürzer ist als bei den Massen nach dem Stand der Technik.

| | **Aushärtezeit bei 130°C** | **Aushärtezeit bei 110°C** |
|---|---|---|
| **Erfindungsgemäße** | | |
| **Masse** | **15 min** | **30 min** |
| **Rezepturbeispiel 2** | | |
| **Masse nach dem** | | |
| **Stand der Technik** | **30 min** | **55 min** |
| **Vergleichsbeispiel** | | |
| **Tabelle 1:** Aushärtezeit in Abhängigkeit von der Temperatur | | |

Es hat sich gezeigt, dass die im Ofen ausgehärtete Masse gemäß der Anmeldeunterlagen gegenüber dem Stand der Technik eine wesentlich höhere Bruchfestigkeit aufweist, wie aus der Tabelle 2 zu erkennen ist.

Diese höheren Bruchfestigkeiten konnten sowohl mit einem "Texture Analyser" als auch nach dem Verfahren des "Three Point Bending Rig" ermittelt und bestätigt werden.

| **Temperatur im** | **Bruchfestigkeit/** | **Bruchfestigkeit/** |
|---|---|---|
| **Härtevorgang,** | **Erfindungsgemäße** | **Masse nach dem** |
| **Härtedauer 30 min** | **Masse [g]** | **Stand der Technik** |
| | | **[g]** |
| **93°C** | **1,071** | **- nicht gehärtet** |
| **104 °C** | **3,097** | **2,333** |
| **116 °C** | **4,706** | **3,714** |
| **130 °C** | **4,183** | **4,181** |
| **Tabelle 2:** Bruchfestigkeit der ausgehärteten Masse | | |

Des Weiteren konnten mit dem Textur Analyser" eine deutlich höhere Elastizität der ausgehärteten Masse gemäß den Anmeldeunterlagen gegenüber Massen nach dem Stand der Technik gemessen werden.

Die **Herstellung** der erfindungsgemäß verwendeten Masse erfolgt beispielsweise gemäß DE 25 15 757 C3, wonach das trockene PVC-Pulver mit dem Füllstoff gemischt und danach der Weichmacher und Co-Stabilisator zugegeben wird. Die so hergestellte Masse wird gegebenenfalls unter Kühlhaltung durch Kneten fertig gestellt.

**Verwendung** findet die Masse bei der Herstellung von plastischen, von Hand verformbaren und durch Erhitzen härtbaren Massen, als Modelliermassen für den Gebrauch durch Kinder und zur Herstellung von kunstgewerblichen und/oder industriellen Gegenständen und die daraus hergestellten Produkte wie z. B. Candle lights, Siegelabdrücke und Schmuckstücke.

Weitere Verwendung findet die Masse oder Modelliermasse zu therapeutischen Zwecken im medizinischen Bereich, um haptische Fähigkeiten zu Trainieren und zu Rehabilitieren.

**Gegenstände und Objekte,** welche mit der erfindungsgemäß verwendeten Masse hergestellt sind, werden nach der Formgebung zur Gestaltung der Gegenstände und Objekte durch Wärmeeinwirkung ausgehärtet.

## Patentansprüche

1. **Verwendung** von plastischen, von Hand verformbaren und durch Erhitzen härtbaren Massen als Modelliermassen für den Gebrauch durch Kinder und zur Herstellung von kunstgewerblichen Gegenständen und die daraus hergestellten Produkte, wobei die Masse aus Bindemittel besteht, welches als Plastisol vorliegt und ggf. weiteren Zusatzstoffen, wobei sich das Plastisol im Wesentlichen aus PVC und Weichmacher zusammensetzt,
**dadurch gekennzeichnet,**
**dass** der Weichmacher phthalatfrei ist
**und dass** die Masse 5 - 30 Gew. % Weichmacher aufweist.

2. **Verwendung einer Masse** nach Anspruch 1, **dadurch gekennzeichnet,**
**dass** die Masse bevorzugt 10 - 28 % phthalatfreien Weichmacher, besonders bevorzugt 15 - 24 % phthalatfreien Weichmacher aufweist.

3. **Verwendung einer Masse** nach Anspruch 1 oder 2, **dadurch gekennzeichnet,**
**dass** der phthalatfreie Weichmacher auf Citronensäurebasis, auf Adipinsäurebasis und/oder Benzoat-ester-Basis aufgebaut ist.

4. **Verwendung einer Masse** nach Anspruch 3,
**dadurch gekennzeichnet,**
**dass** der bevorzugt eingesetzte phthalatfreie Weichmacher Acetyltributylcitrat, Tri-(2-ethylhexyl)-actylcitrat, Trioctylcitrat, Tridecylcitrat, Tributylcitrat, Trihexylcitrat, Triethylcitrat, Dioctyladipat, Diisodecyladipat, Diisononyladipat, 1,2-Cyclohexandicarbonsäurediisononylester, Essigsäureester von Monoglyceriden, Benzoaten oder ein Gemisch aus mindestens zweier dieser Substanzen ist.

5. **Verwendung einer Masse** nach einem der vorhergehenden Ansprüche,
**dadurch gekennzeichnet, dass** sich die Masse aus
| | | |
|---|---|---|
| 5 - 95 Gew. | % | PVC |
| 5 - 30 Gew. | % | Weichmacher, phthalatfrei |
| 0 - 10 Gew. | % | Stabilisator |
| 0 - 10 Gew. | % | Co-Stabilisator |
| 0 - 75 Gew. | % | Füllstoffe |
| 0 - 5 Gew. | % | Farbmittel und |
| 0 - 5 Gew. | % | sonstige Zusätze zusammensetzt. |

6. **Verwendung einer Masse** nach einem der vorhergehenden Ansprüche,
**dadurch gekennzeichnet,**
**dass** der Co-Stabilisator ein Fettsäureester, bevorzugt ein langkettiger Fettsäureester, mit einer Kettenlänge größer C12, wobei der Fettsäureester bevorzugt aus einer geradkettigen Fettsäure und einem Alkohol besteht.

7. **Verwendung einer Masse** nach einem der vorhergehenden Ansprüche
**dadurch gekennzeichnet,**
**dass** der Co-Stabilisator ein epoxidiertes Sojaöl, epoxidierter Ölsäuremethylester, epoxidierter Linolsäuremethylester, epoxidierter Linolensäuremethylester, epoxidierter Linolensäureisopropylester, epoxidierter Rapsfettsäuremethylester, epoxidierter Sojafettsäuremethylester, epoxidierter Leinfettsäuremethylester oder ein Gemisch aus mindestens zweier dieser Substanzen ist.

8. **Verwendung einer Masse** nach einem der vorhergehenden Ansprüche,
**dadurch gekennzeichnet,**
**dass** der Füllstoff anorganisch ist.

9. **Verwendung einer Masse** nach einem der vorstehenden Ansprüche,
**dadurch gekennzeichnet,**
**dass** der Füllstoff Kaolin, Talkum, Kreide, Kieselsäure, Tonmehl und/oder ein Leichtfüllstoff ist.

10. **Verwendung einer Masse** nach einem der vorhergehenden Ansprüche,
**dadurch gekennzeichnet,**
**dass** das Farbmittel als Pigment, bevorzugt als azofreies Farbpigment, Effektpigment und/oder als azofreier verlackter Farbstoff vorliegt.

## Claims

1. Use of plastic materials, which are deformable by hand and hardenable by heating, as modelling materials for use by children and for producing art objects and the products resulting therefrom, wherein the material consists of binding agent which is present as plastisol and optionally further additives, wherein the plastisol is composed substantially of polyvinylchloride and softener, **characterised in that** the softener is free of phthalate and that the material comprises 5 to 30 weight % of softener.

2. Use of a material according to claim 1, **characterised in that** the material comprises preferably 10 to 28% of softener free of phthalate, particularly preferably 15 to 24% of softener free of phthalate.

3. Use of a material according to claim 1 or 2, **characterised in that** the softener free of phthalate is constructed on a citric acid basis, on an adipic acid basis and/or a benzoate ester basis.

4. Use of a material according to claim 3, **characterised in that** the preferably used softener free of phthalate is acetyltributylcitrate, tri-(2-ethylhexyl)-actylcitrate, trioctylcitrate, tridecylcitrate, tributylcitrate, trihexylcitrate, triethylcitrate, dioctyladipate, diisodecyladipate, diisononyladipate, 1,2-cyclohexanedicarboxylic acid diisononylester, ethanoic acid ester of monoglycerides, benzoates or a mixture of at least two of these substances.

5. Use of a material according to any one of the preceding claims, **characterised in that** the material is composed of
5 - 95 weight % polyvinylchloride
5 - 30 weight % softener, free of phthalate
0 - 10 weight % stabiliser
0 - 10 weight % co-stabiliser
0 - 75 weight % fillers
0 - 5 weight % colorant and
0 - 5 weight % other additives.

6. Use of a material according to any one of the preceding claims, **characterised in that** the co-stabiliser is a fatty acid ester, preferably a long-chain fatty acid ester, with a chain length greater than C12, wherein the fatty acid ester preferably consists of a straight-chain fatty acid and an alcohol.

7. Use of a material according to any one of the preceding claims, **characterised in that** the co-stabiliser is an epoxidised soya oil, epoxodised oleic acid methylester, epoxidised linoleic acid methylester, epoxidised linolenic acid methylester, epoxidised linolenic acic isopropylester, epoxidised rape fatty acid methylester, epoxidised soya fatty acid methylester, epoxidised linseed fatty acid methylester or a mixture of at least two of these substances.

8. Use of a material according to any one of the preceding claims, **characterised in that** the filler is inorganic.

9. Use of a material according to any one of the preceding claims, **characterised in that** the filler is kaolin, talcum, chalk, silica, powdered clay and/or a light filler.

10. Use of a material according to any one of the preceding claims, **characterised in that** the colorant is present as a pigment, preferably as an azo-free colour pigment, a colouring pigment and/or an azo-free pigmented dye.

## Revendications

1. Utilisation de matières plastiques, déformables à la main et durcissables par chauffage, en tant que matières de modelage destinées à une utilisation par les enfants et pour fabriquer des objets d'art décoratif, et produits fabriqués à partir de celles-ci, où la matière se compose de matière agglutinante qui se présente sous la forme de plastisol et éventuellement d'autres additifs, où le plastisol se compose essentiellement de PVC et de plastifiant, **caractérisée en ce que** le plastifiant est exempt de phtalate et **en ce que** la matière présente 5 à 30 % en poids de plastifiant.

2. Utilisation d'une matière selon la revendication 1, **caractérisée en ce que** la matière présente de préférence 10 à 28 % de plastifiant exempt de phtalate, de façon particulièrement préférée 15 à 24 % de plastifiant exempt de phtalate.

3. Utilisation d'une matière selon la revendication 1 ou 2, **caractérisée en ce que** le plastifiant exempt de phtalate est fabriqué à base d'acide citrique, à base d'acide adipique et/ou à base d'ester de benzoate.

4. Utilisation d'une matière selon la revendication 3, **caractérisée en ce que** le plastifiant exempt de phtalate utilisé de préférence est le tributylcitrate d'acétyle, le tri-(2-éthylhexyl)-citrate d'acétyle, le citrate de trioctyle, le citrate de tridécyle, le citrate de tributyle, le citrate de trihexyle, le citrate de triéthyle, l'adipate de dioctyle, l'adipate de diisodécyle, l'adipate de diisononyle, le diisononylester d'acide 1,2-cyclohexanedicarboxylique, un ester d'acide acétique de monoglycérides, des benzoates ou un mélange d'au moins deux de ces substances.

5. Utilisation d'une matière selon l'une des revendications précédentes, **caractérisée en ce que** la matière se compose de
5 à 95 % en poids de PVC,
5 à 30 % en poids de plastifiant, exempt de phtalate,
0 à 10 % en poids d'un agent stabilisant,
0 à 10 % en poids d'un agent co-stabilisant,
0 à 75 % en poids de matières de charge,
0 à 5 % en poids de colorant, et
0 à 5 % en poids d'autres additifs.

6. Utilisation d'une matière selon l'une des revendications précédentes, **caractérisée en ce que** l'agent co-stabilisant est un ester d'acide gras, de préférence un ester d'acide gras à chaîne longue présentant une longueur de chaîne supérieure à C12, où l'ester d'acide gras se compose de préférence d'un acide gras à chaîne linéaire et d'un alcool.

7. Utilisation d'une matière selon l'une des revendications précédentes, **caractérisée en ce que** l'agent co-stabilisant est une huile de soja époxydée, un méthylester d'acide oléique époxydé, un méthylester d'acide linoléique époxydé, un méthylester d'acide linolénique époxydé, un isopropylester d'acide linolénique époxydé, un méthylester d'acide gras de colza époxydé, un méthylester d'acide gras de soja époxydé, un méthylester d'acide gras de lin époxydé, ou un mélange d'au moins deux de ces substances.

8. Utilisation d'une matière selon l'une des revendications précédentes, **caractérisée en ce que** la matière de charge est inorganique.

9. Utilisation d'une matière selon l'une des revendications précédentes, **caractérisée en ce que** la matière de charge est du kaolin, du talc, de la craie, de l'acide silicique, de la poudre d'argile et/ou une matière de charge légère.

10. Utilisation d'une matière selon l'une des revendications précédentes, **caractérisée en ce que** le colorant se présente sous la forme de pigment, de préférence en tant que pigment coloré non azoïque, pigment à effet et/ou en tant que colorant laqué ou vernis à pigments non azoïques.
